# EUROPÄISCHE PATENTSCHRIFT

(11) **EP 0 828 924 B1**
(45) Veröffentlichungstag und Bekanntmachung des Hinweises auf die Patenterteilung: **23.12.1998**
(21) Anmeldenummer: 95921804.1
(22) Anmeldetag: 31.05.1995
(51) Int. Cl.: F01D 21/06, F02C 9/46

(54) **MECHANISCHES SHUT-OFF-SYSTEM FÜR EINE GASTURBINE**
MECHANICAL SHUT-OFF SYSTEM FOR A GAS TURBINE
SYSTEME D'ARRET MECANIQUE POUR TURBINE A GAZ

(43) Veröffentlichungstag der Anmeldung: 18.03.1998
(73) Patentinhaber: BMW ROLLS-ROYCE GmbH, 61402 Oberursel (DE)
(72) Erfinder: SIDIROPOULOS, Georgios, D-10781 Berlin (DE)
(74) Vertreter: Schmidt, Günter, Dipl.-Ing.
(86) Internationale Anmeldenummer: EP9502082
(87) Internationale Veröffentlichungsnummer: WO9638655

(56) Entgegenhaltungen:
- DE-A- 2 520 874
- FR-A- 2 529 619
- GB-A- 903 945
- US-A- 3 050 939

## Beschreibung

Die Erfindung betrifft ein mechanisches Absperrsystem oder shut-off-system im Brennstoffversorgungssystem einer Gasturbine, mit einem Absperr-Ventilkörper, der durch eine Feder in eine eine Brennstoffleitung unterbrechende Position bringbar ist, und mit einem Mechanismus, der den Absperr-Ventilkörper bei Normalbetrieb der Gasturbine in einer die Brennstoffleitung freigebenden Position hält und ihn bei einem Schaden oder Bruch eines Gasturbinen-Bauelementes freigibt. Ein derartiges mechanisch betätigtes Absperrsystem, welches beispielsweise bei Bruch einer Gasturbinenwelle schlagartig das Brennstoffversorgungssystem der Gasturbine unterbricht, muß entsprechend existierender Vorschriften bspw. an einer Flug-Gasturbine vorgesehen sein, und ist aus der GB-A-903 945 oder der US-A-3 050 939 bekannnt.

Teilweise ist schwierig, diese bekannten Absperrsysteme, welche auch als shut-off-system bezeichnet werden, derart an einer Gasturbine anzuordnen, daß unter allen möglichen Schadensfällen oder Brüchen an wesentlichen Gasturbinen-Bauteilen eine sichere Unterbrechung der Brennstoffversorgung erfolgt. Hierfür muß nämlich der entsprechende Mechanismus, der bei einem Schadensfall den Absperr-Ventilkörper freigibt, sicher vom gebrochenen bzw. beschädigten Bauteil getroffen werden.

Im Hinblick hierauf ein einfaches und zuverlässiges mechanisches shut-off-system aufzuzeigen, ist Aufgabe der vorliegenden Erfindung. Zur Lösung dieser Aufgabe ist vorgesehen, daß der Mechanismus als ein von einer Feder beaufschlagter Scherenmechanismus ausgebildet ist, der einen Arm umfasst, welcher derart ausgebildet ist, daß er bei einem Schaden oder Bruch eines Gasturbinen-Bauelementes im den Absperr-Ventilkörper freigebenden Sinne beaufschlagt wird.

Näher erläutert wird die Erfindung anhand der beigefügten Prinzipskizze. Dabei ist mit der Bezugsziffer 1 ein Gehäuse bezeichnet, in dem gemäß Pfeilrichtung 2 längsverschiebbar ein Absperr-Ventilkörper 3 geführt ist. Befindet sich dieser Absperr-Ventilkörper 3 in der gezeigten Position, so ist eine das Gehäuse 1 quer zur Pfeilrichtung 2 durchdringende Brennstoffleitung 4 nicht unterbrochen, während diese Brennstoffleitung 4 dann, wenn der Absperr-Ventilkörper 3 nach rechts gefahren wird und mit seinem Mittenabschnitt 3' im Bereich dieser Brennstoffleitung 4 zum Liegen kommt - in dieser Position ist der Absperr-Ventilkörper 3 in dünnen Linien dargestellt -, diese Brennstoffleitung 4 unterbrochen ist. In der in dicken Linien gezeigten Position des Absperr-Ventilkörpers 3 kann somit Brennstoff über die Brennstoffleitung 4 zur nicht gezeigten Brennkammer der Gasturbine gelangen, kommt hingegen der Absperr-Ventilkörper 3 weiter rechts im Bereich der Brennstoffleitung 4 zum Liegen, so wird die Brennstoffzufuhr zur Gasturbinen-Brennkammer unterbrochen, da die Brennstoffleitung 4 dann abgesperrt ist.

Über ein Zugseil 5' sowie eine sich daran anschließende Gewindestange 5 greift am Absperr-Ventilkörper 3 eine sich ebenfalls am Gehäuse 1 abstützende Druck-Feder 6 an, die den Absperr-Ventilkörper 3 gemäß Pfeilrichtung 2 nach rechts bewegen möchte. Durch eine mit der Gewindestange 5 zusammenwirkende Einstellmutter 7 ist dabei die Kraft der Druck-Feder 6 derart voreinstellbar, daß bei Nichtvorhandensein von Gegenkräften der Absperr-Ventilkörper 3 in die die Brennstoffleitung 4 absperrende Position gebracht wird.

Während rechtsseitig des Absperr-Ventilkörpers 3 die beschriebene Druck-Feder 6 angreift, greift linksseitig am Absperr-Ventilkörper 3 ein in seiner Gesamtheit mit 8 bezeichneter Scherenmechanismus an, der zunächst den Absperr-Ventilkörper 3 in der in dicken Linien gezeigten Position hält. Im einzelnen wird dieser Scherenmechanismus 8 durch zwei Arme 9a, 9b gebildet, wobei der Arm 9a ortsfest angelenkt ist und der Arm 9b um einen Gelenkpunkt 10 verschwenkbar ist. Dabei ist der schwenkbare Arm 9b durch eine Zug-Feder 11 derart vorgespannt, daß die beiden Arme 9a, 9b mit ihren freien Enden ein Verbindungselement 12 festzuhalten in der Lage sind. Dieses Verbindungselement 12 ist über einen Seilzug 13, der über eine Umlenkrolle 14 geführt ist, mit dem Absperr-Ventilkörper 3 verbunden.

In der vorgespannten, gezeigten Lage, in der die Brennstoffleitung 4 nicht unterbrochen ist, wird der Absperr-Ventilkörper 3 somit durch den Scherenmechanismus 8 gehalten. Nimmt nun ein nahe des Scherenmechanismus 8 liegendes nicht gezeigtes Bauelement der Gasturbine einen Schaden und kommt dabei möglicherweise sogar zu Bruch, so schlägt beispielsweise dieses Bauelement gemäß Pfeil 15 auf den schwenkbaren Arm 9b des Scherenmechanismus 8 auf. Dieser Aufschlagimpuls des zerstörten Gasturbinen-Bauelementes ist größer als die Kraft der Zug-Feder 11, so daß der Scherenmechanismus geöffnet und hierbei das Verbindungselement 12 freigegeben wird. Dies ermöglicht es der Druck-Feder 6, den Absperr-Ventilkörper 3 wie oben beschrieben in die die Brennstoffleitung 4 unterbrechende Position gemäß Pfeilrichtung 2 zu verschieben. Auf diese Weise kann schlagartig bei Auftreten eines Schadens die Brennstoffversorgung der Gasturbine sicher unterbrochen werden. Selbstverständlich kann der Scherenmechanismus bei einem Schaden auch andersartig ausgelöst werden, stets jedoch im weitesten Sinne durch das beschädigte Bauelement, beispielsweise die Turbinen-Welle. Selbstverständlich wurde die vorliegende Erfindung lediglich anhand einer Prinzipskizze erläutert, konstrukive Details können dabei durchaus abweichend vom gezeigten Ausführungsbeispiel gestaltet sein, ohne den Inhalt der Patentansprüche zu verlassen.

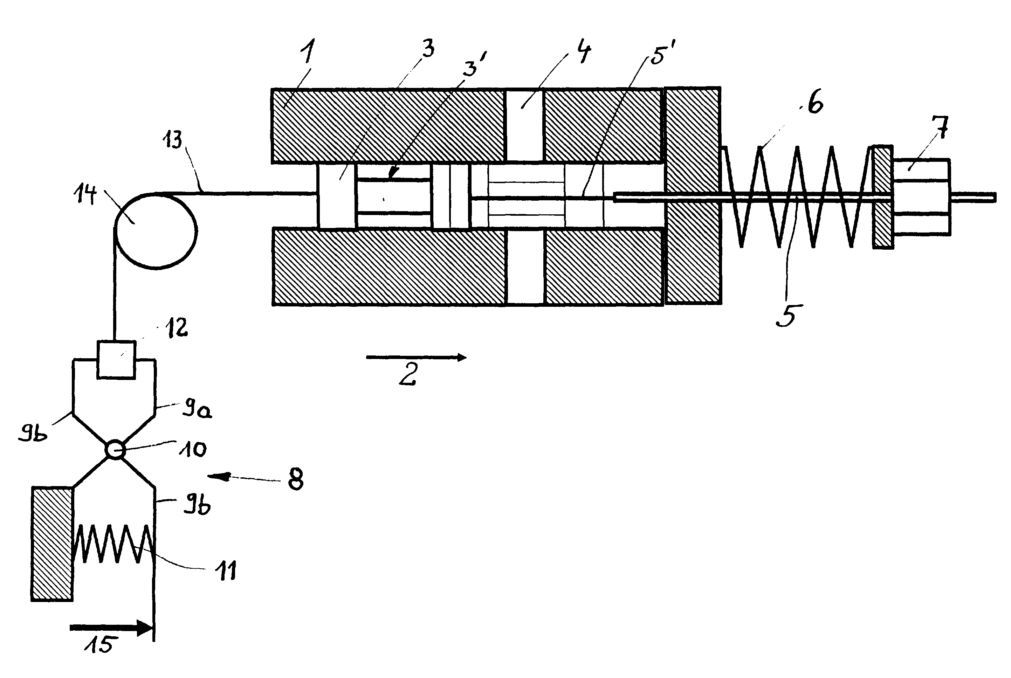

## Patentansprüche

1. Mechanisches Absperrsystem im Brennstoffversorgungssystem einer Gasturbine, mit einem Absperr-Ventilkörper (3), der durch eine Feder (6) in eine eine Brennstoffleitung (4) unterbrechende Position bringbar ist, und mit einem Mechanismus, der den Absperr-Ventilkörper (3) bei Normalbetrieb der Gasturbine in einer die Brennstoffleitung (4) freigebenden Position hält und ihn bei einem Schaden oder Bruch eines Gasturbinen-Bauelementes freigibt,
dadurch gekennzeichnet, daß der Mechanismus als ein von einer Feder (11) beaufschlagter Scherenmechanismus (8) ausgebildet ist, der einen Arm (9b) umfasst, welcher derart ausgebildet ist, daß er bei einem Schaden oder Bruch eines Gasturbinen-Bauelementes im den Absperr-Ventilkörper (3) freigebenden Sinne beaufschlagt wird.

2. Mechanisches Absperrsystem nach Anspruch 1,
gekennzeichnet durch zumindest eines der folgenden Merkmale:
- ein Arm (9b) des zweiarmigen Scherenmechanismus (8) ist um einen Gelenkpunkt (10) drehbar
- ein Arm (9a) des Scherenmechanismus (8) ist ortsfest gelagert
- die beiden Arme (9a, 9b) greifen an einem Verbindungselement (12) des Ventilkörpers (3) an
- die auf der dem Verbindungselement (12) gegenüberliegenden Seite des Gelenkpunktes (10) vorgesehene und als Zugfeder ausgebildete Feder (11) greift am beweglichen Arm (9b) des Scherenmechanismus (8) an
- bei einem Bruch des Gasturbinen-Bauelementes bewegt dieses den beweglichen Arm (9b) entgegen der Kraftrichtung der Feder (11)
- das Verbindungselement (12) ist mit dem Absperr-Ventilkörper (3) über einen Seilzug (13) verbunden
- am Absperr-Ventilkörper (3) greift über eine mit einer Einstellmutter (7) versehene Gewindestange (5) die als Druckfeder ausgebildete Feder (6) an.

## Claims

1. A mechanical shut-off system in the fuel supply system of a gas turbine, with a shut-off valve body (3), which can be brought into a closing position in a fuel line (4) by means of a spring (6), and with a mechanism, which retains the shut-off valve body (3) in a position where the fuel line (4) is unimpeded in the normal operation of the gas turbine and releases it in the event of damage or breakage of a component of the gas turbine, characterised in that the mechanism is constructed as a scissors mechanism (8), loaded by a spring (11), which comprises an arm (9b) which is constructed such that in the event of damage or breakage of a component of the gas turbine it is activated in the releasing sense of the shut-off valve body.

2. A mechanical shut-off system according to Claim 1, identified by at least one of the following characteristics:
- one arm (9b) of the two armed scissors mechanism (8) can pivot about a hinge point (10)
- one arm (9a) of the scissors mechanism (8) is fixed mounted in place
- the two arms (9a, 9b) engage on a linking element (12) of the valve body (3)
- the spring (11) provided on the opposite side of the hinge point (10) to the linking element (12) and configured as a tension spring engages on the movable arm (9b) of the scissors mechanism (8)
- in the event of a breakage of a component of the gas turbine this moves the movable arm (9b) against the force of the spring (11)
- the linking element (12) is joined to the shut-off valve body (3) by a tension wire (13)
- the spring (6), configured as a compression spring engages with the shut-off valve body (3) via a threaded rod (5) provided with an adjusting nut (7).

## Revendications

1. Système mécanique d'arrêt dans le système d'alimentation en combustible d'une turbine à gaz, avec un corps (3) de vanne d'arrêt qui peut être mis par un ressort (6) dans une position qui interrompt une conduite de combustible (4), et avec un mécanisme qui maintient le corps (3) de la vanne d'arrêt quand la turbine à gaz est en fonctionnement normal dans une position qui libère la conduite de combustible(4) et le libère lors de l'endommagement ou de la rupture d'un élément constitutif de la turbine à gaz , caractérisé en ce que le mécanisme est constitué sous la forme d'un mécanisme à leviers croisés (8) actionné par un ressort (11), mécanisme qui comprend un bras (9b) qui est constitué d'une manière telle qu'il est sollicité lors d'un endommagement ou lors d'une rupture d'un élément constitutif de la turbine à gaz dans le sens qui libère le corps (3) de la vanne d'arrêt.

2. Système mécanique d'arrêt selon la revendication 1, caractérisé par au moins l'une des particularités suivantes:
- un bras (9b) du mécanisme à leviers croisés à deux bras (8) peut tourner autour d'un point d'articulation (10)
- un bras (9a) du mécanisme à leviers croisés (8) est monté à poste fixe
- les deux bras (9a, 9b) viennent en prise sur un élément de liaison (12) du corps de vanne (3),
- le ressort (11), qui est prévu sur le côté du point d'articulation (10), qui est en regard de l'élément de liaison (12) et qui est constitué sous la forme d'un ressort de traction, vient en prise sur le bras mobile (9b) du mécanisme à leviers croisés (8)
- en cas de rupture de l'élément constitutif de la turbine à gaz celui-ci déplace le bras mobile (9b) en sens contraire du sens d'action du ressort (11)
- l'élément de liaison (12) est relié au corps (3) de la vanne d'arrêt par un câble de traction (13)
- le ressort (6), qui est constitué sous la forme d'un ressort de compression, vient en prise sur le corps (3) de la vanne d'arrêt au moyen d'une tige filetée (5) pourvue d'un écrou de réglage (7)
